# EUROPÄISCHE PATENTSCHRIFT

(11) **EP 2 064 531 B1**
(45) Veröffentlichungstag und Bekanntmachung des Hinweises auf die Patenterteilung: **07.04.2010**
(21) Anmeldenummer: 07818220.1
(22) Anmeldetag: 18.09.2007
(51) Int. Cl.: G01L 1/24

(54) **FERRULE FÜR EINE EVANESZENZFELDSENSORLEITUNG**
FERRULE FOR AN EVANESCENT FIELD SENSOR LINE
FERRULE POUR UN CABLE DE CAPTEUR DE CHAMP D'EVANESCENCE

(30) Priorität: 20.09.2006 DE 102006044042
(43) Veröffentlichungstag der Anmeldung: 03.06.2009
(73) Patentinhaber: Leoni Automotive Leads Gmbh, 26919 Brake/Unterweser (DE)
(72) Erfinder: NEITZEL, Dirk, 26131 Oldenburg (DE); WAESPY, Wolfgang, 28259 Bremen (DE); KONTANTS, Horst, 26135 Oldenburg (DE)
(74) Vertreter: Dörr, Matthias
(86) Internationale Anmeldenummer: PCT/EP2007/008118
(87) Internationale Veröffentlichungsnummer: WO 2008/034585

(56) Entgegenhaltungen:
- DE-A1- 19 537 383
- DE-C1- 10 131 273
- GB-A- 1 481 290

## Beschreibung

Die Erfindung betrifft eine Ferrule für eine Evaneszenzfeldsensorleitung, insbesondere in Anwendung auf einen Drucksensor.

Unter einer Ferrule wird hierbei ein Führungselement zur Aufnahme eines Lichtwellenleiters, insbesondere zum Zwecke der Aus- und Einkopplung von Licht, verstanden.

Eine Evaneszenzfeldsensorleitung zur Berührungs- und Druckmessung über die Beeinflussung des externen Evaneszenzfeldes eines Lichtwellenleiters ist beispielsweise in der WO 03/069294 A1 dargestellt. Hierbei ist ein Lichtwellenleiter, der ein optisches Faserbündel mit dem Brechungsindex n1 umfasst, in ein optisch dünneres Medium mit dem Brechungsindex n2<1 n, üblicherweise in ein Gas, eingebracht, welches seinerseits von einer optisch dichteren Umhüllung mit dem Brechungsindex n3>n2 umschlossen wird. Der Lichtwellenleiter ist nicht beschichtet, was auch als "cladding-frei" bekannt ist. Die Bedingung einer Totalreflektion wird über das umgebende Medium vorgegeben. Die Umhüllung liegt über stegförmige geometrische Strukturen an dem Lichtwellenleiter an und wird dadurch in einer definierten Beabstandung von diesem gehalten. Die Umhüllung berührt den Lichtwellenleiter somit nicht flächig. In dem unbeschichteten Lichtwellenleiter propagierende Lichtwellen führen Vielfachreflektionen an der Grenzfläche zum umgebenden Medium aus. Bei einer Reflektion dringt das Feld über eine endliche Tiefe in den Außenraum ein und induziert dort das sogenannte Evaneszenzfeld. Durch eine Störung dieses Feldes wird dessen Rückantwortverhalten auf das Medium des Lichtwellenleiters beeinflusst und somit der Grad der Reflektion im Lichtwellenleiter verändert, so dass sich eine derartige Störung durch eine Intensitätsminderung des propagierenden Lichtes verrät, was von einer Signalverarbeitungseinheit endseitig des Lichtwellenleiters registriert wird. Eine Störung des Evaneszenzfeldes erfolgt beispielsweise dann, wenn durch eine Druckeinwirkung auf die Umhüllung deren Abstand zum Lichtwellenleiter lokal reduziert wird, so das Umhüllungsmaterial dort in den Bereich des Evaneszenzfeldes eindringt, welches durch die optische Dichte des Materials lokal partiell absorbiert wird. Wird durch erhöhten Druck der Abstand weiter reduziert, so dass schließlich die Umhüllung den Lichtwellenleiter lokal flächig berührt, so kann es dort zu einem Ausfall der Reflektion kommen, sofern der Brechungsindex des Umhüllungsmaterials größer als derjenige der optischen Fasern des Lichtwellenleiters ist, also falls n3>n1 und somit insgesamt die Relation n2<n1<n3 gilt. Die registrierte Intensitätsvermeindung steigt in diesem Fall gegenüber kleinen Druckeinwirkungen nochmals deutlich an. Der Kontakt der Umhüllung über Haltestege zum Lichtwellenleiter ist dagegen flächig begrenzt und konstant, so dass durch Kalibrierung die hieraus resultierende Beeinflussung des Reflektionsverhaltens im Lichtwellenleiter eliminiert werden kann. Von besonderer Bedeutung ist allgemein die claddingfreie Ausgestaltung, so dass sich das Evaneszenzfeld im Außenraum ausbilden kann.

Eine Evaneszenzfeldsensorleitung eignet sich insbesondere als ein Drucksensor, beispielsweise in einem Stellelement eines Kraftfahrzeugs als Teil eines Einklemmschutzsystems.

Eine Evaneszenzfeldsensorleitung der dargestellten Art, die einen Lichtwellenleiter mit beabstandeter Umhüllung umfasst, ist funktionsbedingt sensitiv gegenüber äußeren mechanischen Störungen. Hierdurch entsteht nachteiligerweise das Problem, eine wasserdichte und zugfeste Anbindung an eine Signalauswertungseinheit darzustellen, durch die nicht schon als solche das Sensorsignal verfälscht wird. Bekannte Ferrulen, die in der Regel als Aderendhülsen ausgebildet sind, eignen sich bestenfalls für Sensorleitungen, die erst auf eine Änderung ihrer Geometrie, insbesondere ihres Krümmungsverlaufes, ansprechen.

Eine erste Aufgabe der Erfindung ist es, eine Ferrule anzugeben, mittels der eine Evaneszenzfeldsensorleitung mit externen Signalverarbeitungskomponenten verbunden werden kann, so dass die Beeinflussung des Sensorsignals möglichst kalibrierbar ist. Eine zweite Aufgabe der Erfindung ist es, einen Drucksensor mit einem zur Druckerfassung ausgebildeten Lichtwellenleiter mittels Beeinflussung des zugeordneten Evaneszenzfeldes und mit einer optoelektronischen Baugruppe anzugeben, wobei die optoelektronische Baugruppe möglichst störungsfrei an den Lichtwellenleiter angekoppelt ist.

Die erste Aufgabe wird erfindungsgemäß dadurch gelöst, indem eine Ferrule angegeben wird, bestehend aus einem Oberteil und aus einem korrespondierend anfügbaren Unterteil, die jeweils eine im wesentlichen halbschalenförmige Ausnehmung derart aufweisen, dass in zusammengefügtem Zustand ein Führungsrohr zur endseitig umschließenden Aufnahme eines Lichtwellenleiters gebildet ist, wobei in den Ausnehmungen jeweils eine Anzahl geometrischer Strukturen zur lokalen Fixierung des Lichtwellenleiters angeordnet sind.

Um die Beeinträchtigung der Funktionalität der Evaneszenzfeldsensorleitung durch die Ferrule zu minimalisieren sind die Innenflächen der Ausnehmungen, insbesondere einschließlich der geometrischen Strukturen, jeweils des Oberteils und des Unterteils für das für den Lichtwellenleiter vorgesehene Licht reflektierend ausgestaltet, insbesondere verspiegelt. Zumindest werden die Stellen reflektierend ausgebildet, die zur Anlage an den claddingfreien Lichtwellenleiter vorgesehen sind. Dadurch werden lokale Absorptionen des Evaneszenzfeldes an den Innenflächen unterbunden und die Störung des Evaneszenzfeldes reduziert sich auf durch die geometrischen Strukturen verursachte Streueffekte an den Berührpunkten zwischen dem Lichtwellenleiter und der Ferrule. Die Reflektivität kann dabei schmalbandig an die Wellenlänge des den Lichtwellenleiter durcheilenden Lichts angepasst werden. Es ist aber auch möglich, die Ferrule breitbandig reflektierend auszugestalten. Durch die reflektierende Ausgestaltung wird insbesondere erreicht, dass an den Berührpunkten des Lichtwellenleiters mit der Ferrule die Bedingung einer Totalreflexion erreicht wird.

Die konkrete Ausgestaltung einer derartigen Verspiegelung kann insbesondere durch Auftragung einer reflektierenden metallischen Schicht auf die Innenflächen, beispielsweise durch eine Verchromung, geleistet werden.

Die Erfindung geht dabei von der Überlegung aus, dass ein für eine Evaneszenzfeldsensorleitung vorgesehener Lichtwellenleiter möglichst lokal begrenzt zu kontaktieren ist, um gemäß der obigen Ausführungen durch flächige Berührungen bewirkte irreguläre Störungen des Evaneszenzfeldes und somit Signalbeeinflussungen im neutralen Zustand zu vermeiden. Als irreguläre Störungen sind solche zu verstehen, die zu groß oder zeitlich fluktuierend sind, so dass sie nicht dazu geeignet sind, wegkalibriert zu werden.

Um im Bereich der zur Verbindung mit einer Signalverarbeitungseinheit vorgesehenen Endseite den Lichtwellenleiter unter Berücksichtigung dieses Kontaktprinzips zu fixieren und dort gegenüber externen Störeinflüssen unempfindlich zu machen, ist eine Ferrule vorgesehene, welche ein Führungsrohr mit innenseitigen Haltestrukturen aufweist, die als lokale geometrische Strukturen zur Fixierung des Lichtwellenleiters ausgebildet sind. Das Führungsrohr stellt dabei bis an die Stelle, wo das Licht aus der Endfläche des Lichtwellenleiters zur optoelektronischen Erfassung austritt, im endseitigen Bereich eine definierte stationäre Umgebung des Lichtwellenleiters dar, deren Einfluss auf den Lichtwellenleiter kalibrierbar ist. Im Vergleich hierzu ist die Umhüllung des Lichtwellenleiters gemäß der vorgehenden Darstellung auch nach dem Kontaktprinzip ausgelegt, aber nicht stationär, da sie Störungen des neutralen Zustandes durch zu messende irreguläre Druckeinwirkungen als Störungen des Evaneszenzfeldes übertragen muss.

Zur vereinfachten Montage ist die Ferrule zweiteilig ausgestaltet, so dass der Lichtwellenleiter in die halbschalenförmige Ausnehmung eines Teils eingefügt und das Führungsrohr erst durch Einpassung des anderen Teils gebildet wird. Die halbschaligen Ausnehmungen sind jeweils mit einer Anzahl der geometrischen Strukturen versehen, auf denen der Lichtwellenleiter lokalisiert aufliegt, insbesondere punktuell oder linienförmig, und die dessen Fixierung in zusammengefügtem Zustand beider Teile im Führungsrohr definieren.

Vorteilhafterweise erstreckt sich eine oder jede geometrische Struktur in einer Ebene orthogonal zur Längsachse des Führungsrohrs. Dadurch wird eine Bewegbarkeit des Lichtwellenleiters im Führungsrohr effektiv unterbunden, die entlang der Längsachse stattfinden würde. Demgegenüber ist eine Verschiebbarkeit der Umhüllung des Lichtwellenleiters in Längsrichtung erwünscht, insbesondere für die Montage der Evaneszenzfeldsensorleitung. Dies wird durch eine lineare Formgebung der Haltestege in Längsrichtung erreicht. Die Umhüllung wird erst durch ihre Verbindung mit der Ferrule gegenüber dem Lichtwellenleiter fixiert.

Zweckdienlicherweise ist jeweils in den halbschalenförmigen Ausnehmungen eine oder jede geometrische Struktur als halbringförmiger Steg oder als Noppe ausgebildet. Während eine Noppe den Lichtwellenleiter im wesentlichen punktuell berührt, bilden zwei sich gegenüberliegende halbringförmige Stege jeweils im Ober- und im Unterteil im zusammengefügten Zustand beider Teile im Führungsrohr einen querschnittsverengenden Fixierungsring aus.

Zur Erfüllung der Haltefunktion weist das Führungsrohr geeigneterweise eine definierte Länge auf, auf der die geometrischen Strukturen im Wesentlichen gleichverteilt angeordnet sind. Auch bietet das Führungsrohr eine gewisse endseitige mechanische Stabilität.

In einer zweckmäßigen Ausführung sind das Oberteil und das Unterteil jeweils mit Elementen zur Bildung einer Rastverbindung zwischen beiden Teilen versehen, die insbesondere zur formschlüssigen Verbindung beider Teile ausgelegt ist. Eine solche Rastverbindung kann insbesondere reversibel ausgestaltet werden und zeichnet sich durch eine leichte Fügbarkeit ohne den Einsatz weiterer Haftmittel sowie durch gute Stabilitätseigenschaften aus, die zur Erfüllung der Halte- und Fixierungsfunktion der Ferrule erforderlich sind.

Die Ferrule dient zur endseitigen Anbindung des Lichtwellenleiters an eine als Signalauswertungseinheit fungierende optoelektronische Baugruppe, vorzugsweise ist die Kopplung der Ferrule an eine solche über eine Rastverbindung hergestellt. Dadurch lässt sich in einfacher Weise die Lichtaustrittsfläche des Lichtwellenleiters gegenüber der Lichtabsorptionsfläche der optoelektronischen Baugruppe definiert positionieren. Entsprechend verhält es sich bei der Positionierung der Lichteinleitungsfläche des Lichtwellenleiters mit der Lichtemissionsfläche einer optoelektronischen Baugruppe. Weiterhin entsprechen die Vorteile der Rastverbindung in analoger Weise den bei der Verbindung der beiden Teile der Ferrule genannten.

In einer bevorzugten Ausbildung der Erfindung ist das Führungsrohr der Ferrule in zusammengefügtem Zustand als ein endseitig freistehendes Teilrohr ausgeführt. Diese Konstruktion ermöglicht insbesondere bei entsprechender geometrischer Ausgestaltung ein Einfügung des Teilrohrs zwischen den Lichtwellenleiter und der Umhüllung, so dass das einen Teil des Führungsrohrs darstellende Teilrohr die Haltefunktion der Umhüllung endseitig übernimmt. Der Lichtwellenleiter wird fixiert, während zugleich das Teilrohr durch die Umhüllung flächig festgehalten wird. Diese Anbindung der Ferrule an die Evaneszenzfeldsensorleitung ist besonders stabil.

Hierbei ist zweckmäßigerweise das dem Lichtwellenleiter zugewandte Ende des Teilrohrs außen konisch verjüngt. Dies vereinfacht die endseitige Einfügung in die Umhüllung des Lichtwellenleiters bzw. ein Überstreifen der Umhüllung auf das Teilrohr und verbessert die Haltestabilität. Zur Montage wird zunächst der Lichtwellenleiter auf der Länge des Führungsrohrs der Ferrule endseitig freigelegt, indem die Umhüllung in Längsrichtung über den Lichtwellenleiter zurückgezogen wird. Das so freigelegte Ende wird dann wie oben beschrieben in der Ferrule durch zweiteilige Montage fixiert. Danach wird die Umhüllung auf der Länge des freistehenden Teilrohrs auf dieses gezogen, was durch dessen konische Verjüngung leicht möglich ist.

In einer alternativen Ausgestaltung der Erfindung ist das Oberteil oder das Unterteil der Ferrule am dem dem Lichtwellenleiter zugewandten Ende durch ein Vollrohrsegment ergänzt, welches die Haltefunktion der Umhüllung übernimmt. Zweckmäßigerweise ist hierfür das Vollrohrsegment innenseitig mit geometrischen Strukturen zur lokalen Kontaktbildung des Lichtwellenleiters versehen, die analog zur Umhüllung eine Längsverschiebung des Lichtwellenleiters zu Montagezwecken erlauben. In zusammengefügtem Zustand beider Teile der Ferrule erscheint das Vollrohrsegment als ein Teil des Führungsrohrs. Eine stabile Verbindung zur Umhüllung des Lichtwellenleiters kann hergestellt werden, indem die Umhüllung zumindest teilweise über das Vollrohrsegment geschoben wird oder endseitig an dieses angebunden wird, beispielsweise mit Hilfe einer Ummantelung. Auch ist vorstellbar, die Umhüllung stumpf an das Vollrohrsegment anstoßen zu lassen und die Kontaktstelle in geeigneter Weise abzudichten beispielsweise zu überspritzen.

Vorzugsweise ist in dieser alternativen Ausführung die Innenseite des Vollrohrsegmentes zur Minimierung der Evaneszenzfeldstörung verspiegelt, wie oben im Falle des Führungsrohrs dargelegt.

Die zweite Aufgabe wird erfindungsgemäß dadurch gelöst, indem ein Drucksensor mit einem zur Druckerfassung ausgebildeten Lichtwellenleiter mittels Beeinflussung des zugeordneten Evaneszenzfeldes angegeben wird, mit zumindest einer optoelektronischen Baugruppe, und mit zumindest einer Ferrule der vorbeschriebenen Art, der die optoelektronische Baugruppe zugeordnet ist.

Durch die Ferrule wird eine stabilisierte Position der Aus- oder Eintrittsseite des Lichtwellenleiters gegenüber der optoelektronischen Baugruppe ermöglicht, so dass die Lichtein- oder auskopplung sicher und verlustfrei ermöglicht ist. Insbesondere bietet es sich an, die optoelektronische Baugruppe in einem Steckerteil anzuordnen, welches zur Aufnahme des Ferrule, insbesondere durch entsprechende Formgebung und bevorzugt durch Verrastung, ausgebildet ist. Hierdurch wird die Lichtaustrittsseite oder die Lichteintrittsseite des Lichtwellenleiters optimiert der optoelektronischen Baugruppe zugewandt positioniert.

Vorteilhafterweise ist zur Ausbildung des Drucksensors die Verbindung der Ferrule mit dem Lichtwellenleiter nach außen abgedichtet, was für die Baugruppe insgesamt schützend und stabilisierend wirkt. Bevorzugterweise ist die Abdichtung zur optoelektronischen Baugruppe hin ausgedehnt, so dass auch dieser Bereich nach außen geschützt und stabilisiert ist. Dies kann beispielsweise durch das die Ferrule und die optoelektronische Baugruppe aufnehmende Steckerteil erreicht werden.

Zweckmäßigerweise ist die Abdichtung durch Umspritzen der Verbindung des Lichtwellenleiters mit der Ferrule realisiert. Hierdurch ist eine zuverlässige Abdichtung herstellbar. Das Spritzmaterial kann beispielsweise ein geeigneter Kunststoff sein. Insbesondere kann das Steckerteil insgesamt aufgespritzt werden. Alternativ dazu kann auch eine vorgefertigte Steckerhülse, die die Ferrule und das optoelektronische Bauteil aufnimmt, zur abschließenden Abdichtung umspritzt werden.

In einer bevorzugten Ausführung der Erfindung ist der Lichtwellenleiter aus einem elastischen Material gefertigt, beispielsweise aus Polyurethan. Dies ist besonders vorteilhaft, um die Sensorleitung wie ein Kabel verformen und biegen zu können, beispielsweise für die Montage in eine vorgegebene Kontur eines Kraftfahrzeugs. Insbesondere schlaufenförmige Leitungen, bei denen die Lichteinleitungs- und Lichtaustrittseinheit zusammen gruppiert sind, weisen sinnvollerweise einen elastisch verformbaren Lichtwellenleiter als Kern der Evaneszenzfeldsensorleitung auf. Die durch die stationäre Verformung bedingte Beeinflussung des Evaneszenzfeldes ist kalibrierbar. Inelastische Lichtwellenleiter sind schwieriger zu verlegen sowie empfindlicher und somit unwirtschaftlicher. Durch Druckeinwirkungen auf die Sensorleitung kann ein solcher Lichtwellenleiter trotz elastischen Umhüllungsmaterials leichter beschädigt werden.

Im Folgenden werden Ausführungsbeispiele der Erfindung anhand einer Zeichnung erläutert. Dabei zeigen
- Fig. 1: eine Ferrule in montiertem Zustand mit Sensorleitungsende im Längsschnitt,
- Fig. 2: das Unterteil der Ferrule nach Fig. 1 in perspektivischer Darstellung,
- Fig. 3: die Ferrule nach Fig. 1 in zusammengefügtem Zustand mit Lichtwellenleiter in zu Fig. 2 identischer Perspektive,
- Fig. 4: eine weitere Ferrule ähnlich derer in Fig. 1 im Längsschnitt mit einer optoelektronischen Baugruppe und einem angespritzten Stecker in Teilansicht,
- Fig. 5: den angespritzten Stecker nach Fig. 4 in perspektivischer Darstellung,

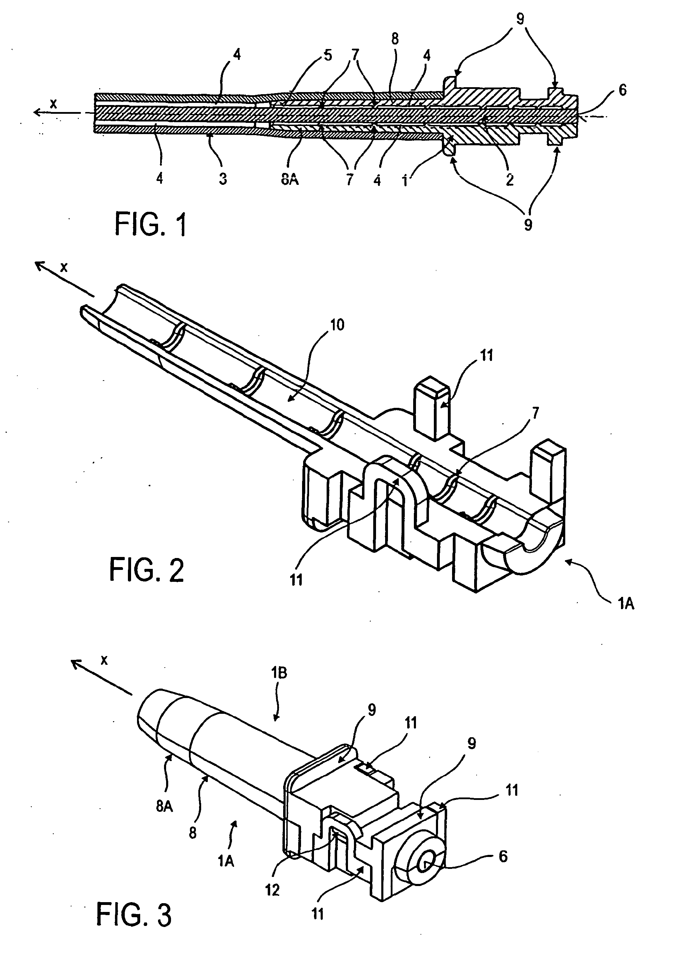

In Fig. 1 ist eine zweischalige Ferrule 1 in montiertem Zustand mit Sensorleitungsende im durch die Längsrichtung x definierten Längsschnitt dargestellt. Die Ferrule 1 umgreift endseitig einen claddingfreien, also unbeschichteten Lichtwellenleiter 2, der im Bereich der Sensorleitung vor der Ferrule 1 von einer Umhüllung 3 beabstandet umschlossen ist. Die Zwischenräume 4 zwischen dem Lichtwellenleiter 2 und der Umhüllung 3 oder der Ferrule 1 sind luftgefüllt. In dem Lichtwellenleiter 2 propagiert Licht durch Totalreflektionen an der inneren Grenzfläche 5 des Lichtwellenleiters bis zur Lichtaustrittsfläche 6, dabei bildet sich außerhalb des Lichtwellenleiters in den Zwischenräumen 4 das sogenannte Evaneszenzfeld, dessen Wechselwirkung mit dem Lichtfeld innerhalb des Lichtwellenleiters 2 die Reflektionen beeinflusst. Die Ferrule 1 weist lokale geometrische Strukturen 7 auf, mittels derer der Lichtwellenleiter 2 lokal fixiert wird. Mittels eines endseitig konisch verjüngten Teilrohrs 8A des den Lichtwellenleiter 2 umgreifenden Führungsrohrs 8 ist die Ferrule 1 in die Umhüllung 3 eingefügt und wird durch diese festgehalten. Die Ferrule 1 weist Mittel 9 zur Verrastung zum Zwecke der Montage eines Steckerteils auf, welches beispielsweise eine optoelektronische Baugruppe umfasst.

In Fig. 2 ist das Unterteil 1A der Ferrule nach Fig. 1 perspektivisch dargestellt. Sichtbar ist die innenseite der halbschaligen Ausnehmung 10, die mit als halbringförmige Stege realisierten geometrischen Strukturen 7 versehen ist. Diese liegen orthogonal zur Längsrichtung x, so dass ein eingelegter Lichtwellenleiter in zusammengefügtem Zustand mit dem zum Unterteil 1A korrespondierenden Oberteil fixiert wird Die Ausnehmung 10 ist einschließlich der geometrischen Strukturen 7 verchromt, wodurch eine Absorption des Evaneszenzfeldes eines Lichtwellenleiters vermieden wird. Weiterhin sichtbar sind Mittel 11 zur Verrastung mit dem zu dem Unterteil 1A korrespondierenden Oberteil, aus denen durch Zusammenfügung die Ferrule 1 gebildet wird.

In Fig. 3 ist die Ferrule 1 nach Fig. 1 in aus dem zugehörigen Unterteil 1A und dem zugehörigen Oberteil 1 B zusammengefügtem Zustand in zu Fig. 2 identischer Perspektive dargestellt. Sichtbar sind die Lichtaustrittsfläche 6 eines eingebrachten Lichtwellenleiters, Mittel 9 zur Verrastung zum Zwecke einer weiteren Montage der Ferrule 1, sowie das freistehende Teilrohr 8A des Führungsrohrs 8 der Ferrule 1, auf welches im montierten Zustand die Umhüllung 3 der Evaneszenzfeldsensorleitung gezogen wird. Anhand der Rastmittel 11 und 12, die respektive zu den Teilen 1A und 1 B gehören, ist der zusammengefügte Zustand gut erkennbar.

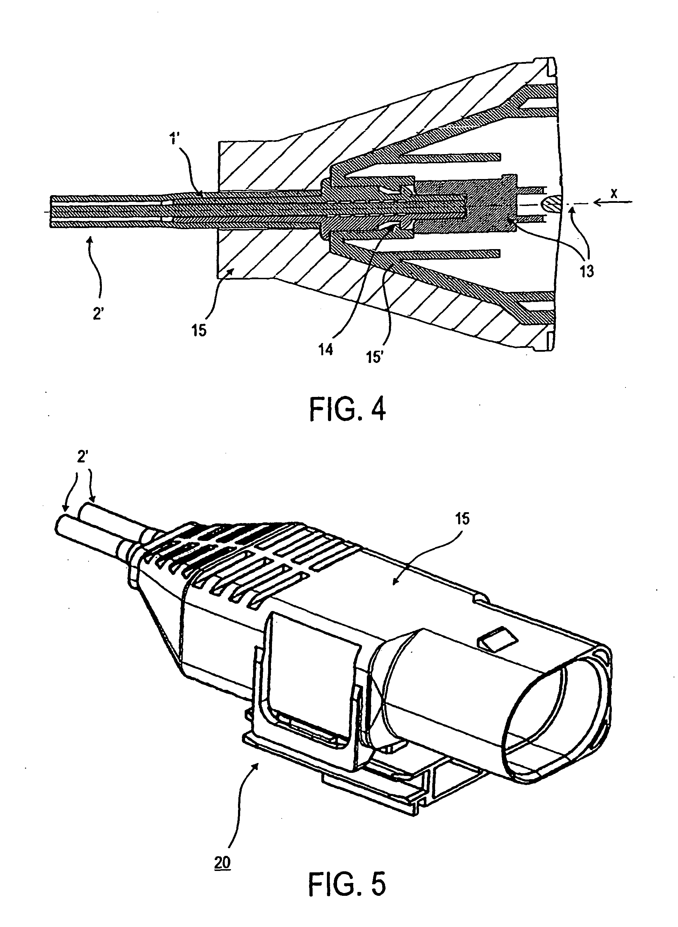

In Fig. 4 ist eine weitere Ferrule 1' ähnlich derer in Fig. 1 im durch die Längsrichtung x definierten Längsschnitt mit einer optoelektronischen Baugruppe 13, die ein Lichtführungselement und eine Diode zur Lichteinkopplung umfasst, und einem angespritztem Stecker 15 in Teilansicht gezeigt. Die Ferrule 1' unterscheidet sich von der in Fig. 1 dargestellten Ferrule nur durch die Ausgestaltung der Rastmittel im Bereich 14 der Verrastung mit der optoelektronischen Baugruppe. Die Details der Darstellung der Sensorleitung 2' und der Ferrule 1' entsprechen denen in Fig. 1 in analoger Weise. Der Stecker 15 ist aus einem abdichtenden Füllmaterial einem vorgefertigten Steckerteil 15'aufgespritzt, welches die Ferrule 1' und die optoelektronische Baugruppe 13 zueinander positioniert.

Fig. 5 zeigt den angespritzten Stecker 15 nach Fig. 4 in perspektivischer Darstellung. Der Stecker ist für eine schlaufengelegte Evaneszenzfeldsensorleitung oder Sensorleitung 2' realisiert und enthält in einem Ausgang und in einem Eingang zwei Ferrulen, die jeweils die Anfangs- und die Endseite des zugehörigen Lichtwellenleiters aufnehmen. Die gezeigte Baugruppe bildet insgesamt einen Drucksensor 20 aus.

### Bezugszeichenliste

- 1.1': Ferrule
- 1 A: Unterteil der Ferrule 1
- 1 B: Oberteil der Ferrule 1
- 2: Lichtwellenleiter
- 2': Sensorleitung
- 3: Umhüllung
- 4: Zwischenräume
- 5: Grenzfläche des Lichtwellenleiters
- 6: Lichtaustrittsfläche des Wellenleiters
- 7: geometrische Strukturen
- 8: Führungsrohr
- 8A: Teilrohr des Führungsrohrs 8
- 9: Mittel zur Verrastung
- 10: Ausnehmung
- 11,12: Mittel zur Verrastung
- 13: optoelektronische Baugruppe
- 14: Bereich der Verrastung
- 15: Stecker

## Patentansprüche

1. Ferrule (1,1') für eine Evaneszenzfeldsensorleitung, mit einem Unterteil (1A) und mit einem korrespondierend anfügbaren Oberteil (1B), die jeweils eine im wesentlichen halbschalenförmige Ausnehmung (10) derart aufweisen, dass in zusammengefügtem Zustand ein Führungsrohr (8) zur endseitig umschließenden Aufnahme eines Lichtwellenleiters (2) gebildet ist, wobei in den Ausnehmungen (10) jeweils mehrere geometrische Strukturen (7) zur lokalen Fixierung des Lichtwellenleiters (2) angeordnet sind und die Innenflächen der Ausnehmungen (10) jeweils für das für den Lichtwellenleiter (2) vorgesehene Licht zumindest teilweise reflektierend ausgebildet sind, wobei die geometrischen Strukturen (7) querschnittsverengend als halbringförmige Stege oder als Noppen und reflektierend ausgebildet sind.

2. Ferrule (1, 1') nach Anspruch 1, wobei
die Innenflächen der Ausnehmungen (10) zumindest teilweise mit einer reflektierenden Beschichtung versehen sind.

3. Ferrule (1,1') nach Anspruch 1 oder 2, wobei
sich eine oder jede geometrische Struktur (7) im Wesentlichen jeweils in einer Ebene orthogonal zur Längsachse (x) des Führungsrohrs (8) erstreckt.

4. Ferrule (1,1') nach Anspruch 3, wobei
die geometrischen Strukturen (7) bezüglich der Längsachse (x) entlang der Ausnehmungen im Wesentlichen gleichverteilt sind.

5. Ferrule (1,1') nach einem der vorangegangenen Ansprüche, wobei
das Oberteil (1B) und das Unterteil (1A) mittels einer Rastverbindung zusammenfügbarsind, die insbesondere zur formschlüssigen Verbindung beider Teile ausgelegt ist.

6. Ferrule (1,1') nach einem der vorangegangenen Ansprüche,
welches in zusammengefügtem Zustand zur endseitigen Ankopplung, insbesondere mittels Verrastung, an eine optoelektronische Baugruppe (13) ausgebildet ist.

7. Ferrule (1,1') nach einem der vorangegangenen Ansprüche, wobei
das Unterteil (1A) und das Oberteil (1B) derart ausgebildet sind, dass in zusammengefügtem Zustand entlang der Längsrichtung (x) ein freistehendes Teilrohr (8A) gebildet ist.

8. Ferrule (1,1') nach Anspruch 7, wobei
das dem Lichtwellenleiter (2) zugewandte Ende des Teilrohrs (8A) außen konisch verjüngt ist.

9. Drucksensor (20) mit einem zur Druckerfassung ausgebildeten Lichtwellenleiter (2) mittels Beeinflussung des zugeordneten Evaneszenzfeldes, mit zumindest einer optoelektronischen Baugruppe (13), und mit zumindest einer Ferrule (1,1') nach einem der vorangegangenen Ansprüche, der die optoelektronische Baugruppe (3) zugeordnet ist.

10. Drucksensor (20) nach Anspruch 9, wobei
die optoelektronische Baugruppe in einem Steckerteil angeordnet ist, welches zur Aufnahme der Ferrule (1,1'), insbesondere durch entsprechende Formgebung und bevorzugt durch Verrastung, ausgebildet ist.

11. Drucksensor (20) nach Anspruch 9 oder 10, wobei
die Verbindung der Ferrule (1,1') mit dem Lichtwellenleiter (2) nach außen abgedichtet ist.

12. Drucksensor (20) nach Anspruch 11, wobei
die Verbindung der Ferrule (1,1') mit dem Lichtwellenleiter (2) umspritzt ist.

13. Drucksensor (20) nach einem der Ansprüche 9 bis 12, wobei
der Lichtwellenleiter (2) aus einem elastischen und transparenten Material gebildet ist, insbesondere aus Polyurethan.

## Claims

1. Ferrule (1, 1') for an evanescent field sensor line (2') having a lower part (1A) and a correspondingly attachable upper part (1B), which each have an essentially half-shell-shaped recess (10) in such a way that, when put together, a guide tube (8) is formed in order to enclose an optical waveguide (2) at its end, whereby a number of geometric structures (7) are arranged in each of the recesses (10) in order to locally fixate the optical waveguide (2) and the inner surfaces of the recesses (10) are designed in such a way that they are at least partially reflecting the light intended for the optical waveguide (2), whereby the geometric structures (7) are formed to reduce the cross-section as semi-annular webs or as nubs as well as reflective.

2. Ferrule (1, 1') according to claim 1, whereby the inner surfaces of the recesses (10) are at least partially coated with a reflective lining.

3. Ferrule (1, 1') according to claim 1 or 2, whereby one or each geometric structure (7) essentially extends, in respectively a plane, orthogonally to the longitudinal axis (x) of the guide tube (8).

4. Ferrule (1, 1') according to claim 3, whereby the geometric structures (7) are, relative to the longitudinal axis (x), essentially equally distributed along the recesses.

5. Ferrule (1, 1') according to any of the preceding claims, whereby the upper part (1 B) and the lower part (1A) can be joined together by means of a latching connection, which is designed particularly in order to connect both pieces in a form fitting manner.

6. Ferrule (1, 1') according to any of the preceding claims, which, when put together, is designed for coupling of an optoelectronic assembly (13) at its end, especially by means of latching.

7. Ferrule (1, 1') according to any of the preceding claims, whereby the lower part (1A) and the upper part (1B) are formed in such a way that, when joined together, a freestanding partial tube (8A) is formed along the longitudinal axis (x).

8. Ferrule (1, 1') according to claim 7, whereby the end of the partial tube (8A) facing the optical waveguide (2) is conically tapered towards the outside.

9. Pressure sensor (20) with an optical waveguide (2) for detecting the pressure by means of the associated evanescense field, having at least one optoelectronic assembly (13), and having at least one ferrule (1, 1') according to any of the preceding claims, assigned to which is the optoelectronic assembly (13).

10. Pressure sensor (20) according to claim 9, whereby the optoelectronic assembly (13) is housed in a plug part, which is designed for holding the ferrule (1, 1'), especially by means of appropriate shaping and preferably by means of latching.

11. Pressure sensor (20) according to claim 9 or 10, whereby the connection of the ferrule (1, 1') with the optical waveguide (2) is sealed off to the outside.

12. Pressure sensor (20) according to claim 11, whereby the connection of the ferrule (1, 1') is molded with the optical waveguide (2).

13. Pressure sensor (20) according to one of claims 9 through 12, whereby the optical waveguide (2) consists of an elastic and transparent material, particularly of polyurethane.

## Revendications

1. Ferrule (1, 1') pour un conducteur de capteur de champ d'évanescence, comprenant une partie inférieure (1A) et une partie supérieure (1B) pouvant y être assemblée de manière correspondante, qui présentent chacune un évidement (10) sensiblement en forme de demi-coque de façon telle, que dans l'état assemblé, soit formé un tube de guidage (8) pour y recevoir, en l'entourant à son extrémité, un guide d'onde lumineuse ou une fibre optique (2),
ferrule pour laquelle dans chacun des évidements (10) sont agencées plusieurs structures géométriques (7) destinées à la fixation locale de la fibre optique (2), et les surfaces intérieures des évidements (10) sont respectivement d'une configuration au moins partiellement réfléchissante pour la lumière prévue pour la fibre optique (2),
et dans laquelle les structures géométriques (7) sont réalisées en tant que nervures en forme de demi-anneau ou en tant que plots, qui produisent un rétrécissement de section transversale, et sont également de configuration réfléchissante.

2. Ferrule (1, 1') selon la revendication 1,
dans laquelle les surfaces intérieures des évidements (10) sont munies, au moins en partie, d'un revêtement réfléchissant.

3. Ferrule (1, 1') selon la revendication 1 ou la revendication 2,
dans laquelle une ou chaque structure géométrique (7) s'étend sensiblement respectivement dans un plan orthogonal à l'axe longitudinal (x) du tube de guidage (8).

4. Ferrule (1, 1') selon la revendication 3,
dans laquelle les structures géométriques (7), en se référant à l'axe longitudinal (x), sont réparties sensiblement de manière régulière le long des évidements.

5. Ferrule (1, 1') selon l'une des revendications précédentes,
dans laquelle la partie supérieure (1B) et la partie inférieure (1A) peuvent être assemblées au moyen d'une liaison par encliquetage, qui est notamment conçue pour assurer la liaison par complémentarité de formes des deux parties.

6. Ferrule (1, 1') selon l'une des revendications précédentes,
qui, dans l'état assemblé, est conçue pour le couplage d'extrémité, notamment par voie d'encliquetage, à un module optoélectronique (13).

7. Ferrule (1, 1') selon l'une des revendications précédentes,
dans laquelle la partie inférieure (1A) et la partie supérieure (1B) sont réalisées de façon telle que dans l'état assemblé, soit formé le long de la direction longitudinale (x), un tube partiel (8A) en porte-à-faux.

8. Ferrule (1, 1') selon la revendication 7,
dans laquelle l'extrémité du tube partiel (8A), qui est dirigée vers la fibre optique (2), se rétrécit de manière conique à l'extérieur.

9. Capteur de pression (20) comprenant un guide d'onde lumineuse ou une fibre optique (2) conçu pour relever une pression par influence du champ d'évanescence associé, comprenant au moins un module optoélectronique (13), et comprenant au moins une ferrule (1, 1') selon l'une des revendications précédentes, à laquelle est associé le module optoélectronique (13).

10. Capteur de pression (20) selon la revendication 9,
dans lequel le module optoélectronique est agencé dans une pièce de connecteur, qui est conçue pour recevoir la ferrule (1, 1'), notamment par une configuration de forme correspondante, et de préférence par encliquetage.

11. Capteur de pression (20) selon la revendication 9 ou la revendication 10,
dans lequel la liaison de la ferrule (1, 1') avec la fibre optique (2) est rendue étanche vers l'extérieur.

12. Capteur de pression (20) selon la revendication 11,
dans lequel la liaison de la ferrule (1, 1') avec la fibre optique (2) est entourée par moulage par injection.

13. Capteur de pression (20) selon l'une des revendications 9 à 12,
dans lequel la fibre optique (2) est réalisée en un matériau élastique et transparent, notamment en polyuréthanne.
